# EUROPÄISCHE PATENTSCHRIFT

(11) **EP 0 668 293 B1**
(45) Veröffentlichungstag und Bekanntmachung des Hinweises auf die Patenterteilung: **20.09.2000**
(21) Anmeldenummer: 95101474.5
(22) Anmeldetag: 03.02.1995
(51) Int. Cl.: C08B 37/00, C08B 13/00, C08B 31/16

(54) **Thermoplastische biologisch abbaubare Polysaccharidderivate, Verfahren zu ihrer Herstellung und ihre Verwendung**
Thermoplastic biodegradable polysaccharide derivates, process for obtaining the same and their uses
Dérivés de polysaccharides thermoplastiques et biologiquement dégradables, procédé pour leur préparation ainsi que leur utilisation

(30) Priorität: 16.02.1994 DE 4404840
(43) Veröffentlichungstag der Anmeldung: 23.08.1995
(73) Patentinhaber: WOLFF WALSRODE AG, 29655 Walsrode (DE)
(72) Erfinder: Kalbe, Dr. Jochen, D-45219 Essen (DE); Müller, Dr. Hanns-Peter, D-51519 Odenthal (DE); Koch, Dr. Rainhard, D-51065 Köln (DE); Engelhardt, Dr. Jürgen, D-29699 Bomlitz (DE); Koch, Dr. Wolfgang, D-29699 Bomlitz (DE); Szablikowski, Dr. Klaus, D-29664 Walsrode (DE); Weber, Dr. Gunter, D-29683 Fallingbostel (DE)
(74) Vertreter: Pettrich, Klaus-Günter, Dr.

(56) Entgegenhaltungen:
- EP-A- 0 219 426

## Beschreibung

Die vorliegende Erfindung betrifft thermoplastische, biologisch abbaubare Polysaccharidetherester, wie z. B. Celluloseetherester oder Stärkeetherester, sowie die Herstellung solcher Mischpfropfpolymerisate aus Polysacchariden, Epoxiden und Dicarbonsäureanhydriden und deren Verwendung, z.B. als Formteile, Folien oder Beschichtungen.

In der Literatur beschriebene Celluloseetherester, wie z. B. für magensaftresistente Tablettenverkapselungen, bestehen aus Celluloseethern, die in verschiedenen Verfahren mit Carbonsäureanhydriden zu deren Monoestern umgesetzt werden. (siehe C.J. Malm, Analytical Chemistry, 25(2), 1953, 245-249; C.J. Malm, Industrial and Engineering Chemistry, 49(1), 1957, 84-88; EP 219426 (06.10.86), DOS 2140996 (16.08.71)).

Je nach Anforderung können dabei durch Variation des Etherderivates, z. B. Methyl-, Ethyl-, Hydroxyethyl-, Hydroxypropyl-, Propyl-, Butylcellulose, oder auch Mischethertypen, wie Methylhydroxyethyl- oder Methylhydroxypropylcellulose, oder durch Wahl verschiedener Dicarbonsäureanhydride, wie Phthalsäure, Tetrahydrophthalsäure, Hexahydrophthalsäure, oder durch variierenden Substitutionsgrad dieser Substituenten, Eigenschaftsprofile eingestellt werden (siehe DOS 2140996 (16.08.71))

Bei dieser Produktlasse handelt es sich um aus organischen Lösemitteln oder aus Wasser applizierbaren Lacksystemen zur Tablettenverkapselung.

Die biologische Abbaubarkeit eines Polysaccharidderivates ist abhängig von der Höhe des Substutitionsgrades jeder Saccharideinheit. (siehe J.G. Batelaan in The Handbook of Environmental Chemistry, Volume 3, Part F, Ed. O. Hutzinger, Springer-Verlag, 1992, 229-336; M.G. Wirick, Journal of Polymer Science, Part A-1, 6 (1968), 1705-1718). So sind alle technisch verfügbaren Cellulosederivate nur mit durchschnittlichen Substitutionsgraden kleiner als 1,0 biologisch abbaubar. Thermoplastizität ist dagegen bei bekannten Derivaten wie z. B. Celluloseacetat, erst mit Substitutionsgraden größer als 2,5 zu erzielen ( T. Eicher, in Ullmanns Encyklopädie der technischen Chemie, 4. Auflage, 9, 1975, 227-246).

Wenig modifizierte Polysaccharide sind in der Regel gut biologisch abbaubar, können jedoch technologische Anforderungen, wie z. B. Extrusionsfähigkeit auf herkömmlichen Extrusionsanlagen, Wasserdampffestigkeit und Wasserdichtigkeit oder mit Standard-Kunststoffen vergleichbare mechanische Eigenschaften, nicht erfüllen (K. Dormann, Zuckerind. 116(7), 1991, 620-623).

Thermoplastische und damit auch zu Formteilen, wie z. B. Folien, extrudierbare Polysaccharidderivate, die gleichzeitig vollständig biologisch abbaubar sind, existieren bis auf die in den älteren Patentanmeldungen DE-A 4 228 376 und DE-A 4 317 231 in beschriebenen Substanzen nicht.

Die Synthese der bekannten Polysacchariddicarbonsäurehalbester gelingt in Pyridin oder Essigsäure mit basischen Salzen wie Natriumacetat als Katalysator. Die Produkte sind nur aufwendig von diesen Lösemitteln zu befreien. Aufgrund der Korosionsförderung durch diese Lösemittel bedarf es speziell ausgelegter Anlagen zu ihrer Synthese. Von Vorteil wären hierzu Synthesen in organischen Standardlösungsmitteln.

Aufgabe der vorliegenden Erfindung ist die Synthese von neuartigen thermoplastischen, extrudierbaren und biologisch abbaubaren Polysaccharidetherestern durch Veresterung von Polysacchariden oder Polysaccharidethern mit Dicarbonsäureanhydriden, wie z. B. Phthalsäure oder Hexahydrophthalsäure, zu Monoestern und anschließender Umsetzung der freien Carboxylgruppe mit Alkylenoxiden wie Ethylenoxid oder Propylenoxid in organischen Standardlösungsmitteln.

Durch die anschließende Veresterung der freien Carboxylgruppe mit Alkylenoxiden soll die Thermostabilität und damit Extrudierbarkeit dieser Polysaccharidderivate erzielt werden. Hierbei soll gleichzeitig die biologische Abbaubarkeit erhalten bleiben.

Gegenstand der vorliegenden Erfindung sind somit thermoplastische und biologisch abbaubare Polysaccharidderivate aus Polysacchariden bzw. Polysaccharidethern, die mit cyclischen Dicarbonsäureanhydriden und Alkylenoxiden umgesetzt wurden, gemäß Anspruch 1.

Gegenstand der Erfindung ist weiterhin ein Verfahren zur Herstellung von derartigen thermoplastischen und biologisch abbaubaren Polysaccharidetherestern, das dadurch gekennzeichnet ist, daß das Polysaccharid bzw. der Polysaccharidether mit Alkalilauge oder organischen tertiären Aminen oder anorganischen, basischen Salzen aktiviert und dann in geeigneten organischen Lösungs- bzw. Suspensionsmitteln mit cyclischen Carbonsäureanhydriden zum Dicarbonsäurehalbester verestert wird, der dann mit weiterem Alkylenoxid in den entsprechenden Dicarbonsäurediester überführt wird.

Die nach diesem Verfahren erfindungsgemäß herzustellenden Polysaccharidetherester lassen sich durch die allgemeine Struktur:
Polysaccharid-O-R
beschreiben, wobei Polysaccharid-O die substituierten OH-Gruppen einer polymeren Saccharideinheit repräsentieren und R entweder ein mono- und/oder polymerer Substituent der Struktur X ist:
X = -A-B-A'-
in der A und A' eine lineare Polyetherkette folgender Struktur sind:
A = (-D-O)ₙ und A' = (-D-O)ₘH
in der D eine lineare aliphatische oder aromatische verzweigte oder unverzweigte Kette mit 2 bis 11 C-Atomen bedeutet und n eine ganze Zahl gleich oder größer als 0 ist, m eine ganze Zahl gleich oder größer als 1 ist, und B eine Dicarbonsäure folgender Struktur ist: 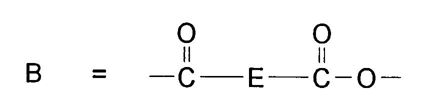 in der E ein aromatisches oder aliphatisches Kohlenstoffgerüst das gegebenenfalls mit weiteren Substituenten versehen sein kann ist, wobei das Verhältnis von A' zu B gleich oder größer 0,1 ist, oder R ist entsprechend dem Substitutionsgrad pro Saccharideinheit mit X gleich H (Wasserstoff) und/oder Alkyl mit 1 bis 4, vorzugsweise 1 bis 2 C-Atomen.

Zur Synthese wird das Polysaccharid mit Alkalilauge aktiviert. Diese Aktivierung kann durch die Synthese und Isolierung eines Alkalipolysaccharids geschehen oder alternativ durch Herstellung eines wasserfeuchten Alkalipolysaccharids oder einer Suspension des Polysaccharids in wassermischbaren Lösungsmitteln und anschließender Zugabe einer wässrigen Alkalilösung.

Hierzu können weiterhin aktivierende Behandlungen wie z. B. mit flüssigem Ammoniak oder Ultraschall hinzugezogen werden.

Vor Beginn der Veretherungs- und Veresterungsreaktion wird das Wasser und/oder lösemittelfeuchte Alkalipolysaccharid einer Lösemittelwäsche unterzogen, wodurch ein definierter Alkali-Gehalt eingestellt werden kann.

Ebenso kann die Aktivierung durch Aufsprühen einer wässrigen Alkali-Lauge vorgenommen werden. Auf das so aktivierte Polysaccharid wird das Epoxid aufgepfropft und vorzugsweise vor der Reaktion mit dem Dicarbonsäureanhydrid das im Reaktionsansatz vorhandene Wasser abdestilliert.

Die Reaktion mit den Dicarbonsäureanhydriden wird in Suspensionsmitteln durchgeführt. Hierbei ist es als überraschend anzusehen, daß das Dicarbonsäureanhydrid in einer Zweiphasen-Reaktion (flüssig-fest) mit dem Polysaccharid in organischen Standard-Lösemitteln reagiert, da vergleichbare Reaktionen nur in aktivierenden und stark quellenden Lösemitteln wie Essigsäure und Pyridin durchgeführt werden konnten.

Alternativ zur Aktivierung mit Alkalilauge kann die Umsetzung des Polysaccharids mit dem Dicarbonsäureanhydrid auch mit organischen Aminen durchgeführt werden. Hierzu wird das Polysaccharid oder der alkalifreie Celluloseether im Suspensionsmedium mit dem Amin als Katalysator aufgerührt und zu dieser Suspension bzw. Lösung das Dicarbonsäureanhydrid hinzugegeben. Hierbei entsteht der Dicarbonsäuremonoester des Polysaccharids bzw. des Polysaccharidethers.

In Suspensionsmitteln wie DMSO, DMAc oder DMF geht das Produkt während der Umsetzung mit dem Dicarbonsäureanhydrid in Lösung.

Im nächsten Schritt wird die noch freie Carboxylgruppe des so entstandenen Dicarbonsäuremonoesters mit Alkylenoxiden umgesetzt. Dabei können die Mengenverhältnisse so gewählt werden, daß die freien Carbonsäuren vollständig oder nur teilweise mit Alkylenoxid umgesetzt werden. Ebenso können die freien Säuregruppen als Starter für einen polymeren Etheraufbau dienen.

Wurde zur Aktivierung Amin verwendet, dient es auch bei diesem Reaktionsschritt als Katalysator. Entsprechend können bei Alkaliaktivierung an dieser Stelle geringe Mengen Amin zugegeben werden.

Sind die so entstandenen Polysaccharidetherester im Suspensions- bzw. Lösungsmittel vollständig gelöst, können sie durch Destillation oder Fällung in Nichtlösemitteln wie z. B. Wasser oder Isopropanol isoliert werden.

Durch die vielfältigen Kombinationsmöglichkeiten der Substituenten bei verschiedenen Substitutionsgraden lassen sich die Eigenschaften der Polysaccharidetherester in einem breiten Spektrum variieren. So kann z. B. der Schmelzbereich zwischen 80 und 250°C eingestellt werden.

Dieser weit einstellbare Schmelzbereich ist überraschend und war für den Fachmann nicht vorhersagbar, da bekannte Polysacchariddicarbonsäurehalbester wie z. B. Celluloseacetatphthalat oder Methylhydroxypropylphthalat bei Temperaturen größer als 180°C unter langsamer Zersetzung schmelzen und Hydroxyalkylpolysaccharide wie Hydroxypropylcellulose erst bei hohen Substitutionsgraden Schmelzbereiche zwischen 180 und 200°C aufweisen.

Durch die Veresterung der freien Carboxylgruppe sind diese Polysaccharidderivate im Gegensatz zu den bisher bekannten Dicarbonsäurehalbestern thermisch stabil und gut extrudierbar.

Weitere einstellbare Größen sind Löslichkeitsverhalten, Wasserdampfdurchlässigkeit und Schmelzviskosität.

Für die Synthese ist technisch zugängliche Cellulose, wie z. B. Holzzellstoff und Baumwollinters beliebigen Molgewichts oder andere zellstoffhaltige Produkte wie z.B. Sägespäne, geeignet. Weiterhin eignen sich native und lösliche Stärken beliebiger Provenienz und Vorbehandlung sowie Amylose, Amylopektin, Alginat, Glykogen, Carraghenat, Chitin, Chitosan, Guar als Splits oder Mehl, Johannisbrotkernmehl, Pektin, Xylan, Xanthan, Pullulan, Dextran und Laevan.

Hierbei ist es möglich zur Einstellung des Molgewichtes während der Behandlung mit Alkalihydroxiden einen oxidativen Kettenabbau durch Luftsauerstoff nach bekannten Verfahren durchzuführen, bei Cellulose sind die eingesetzten Faserlängen beliebig, bevorzugt kürzer als 2000µm, besonders bevorzugt kürzer als 1000µm.

Werden Polysaccharidether, insbesondere Celluloseether eingesetzt, eignen sich Celluloseether wie Methylcellulose oder Ethylcellulose oder Benzylcellulose mit durchschnittlichen Substitutionsgraden kleiner/gleich 2,5, Hydroxyethylcellulose, Hydroxypropylcellulose, Dihydroxypropylcellulose, Hydroxybutylcellulose, Methylhydroxyethylcellulose, Methylhydroxypropylcellulose, Methylhydroxybutylcellulose, Ethylhydroxypropylcellulose, Ethylhydroxyethylcellulose, Carboxyalkylcellulose, Sulfoalkylcellulose, Cyanoethylcellulose und deren Mischether.

Als Suspensions- bzw. Lösungsmittel eignen sich Ketone, Ether und cyclische Ether, Acetale, Kohlenwasserstoffe und polare aprotische Verbindungen wie Dimethylsulfoxid, Dimethylformamid, Dimethylacetamid, Dioxan, Tetrahydrofuran, N-Methylmorpholin, N-Methylpyrolidon, Dimethoxyethan, Dimethoxymethan, Dimethylether, Diethylenglykoldimethylether.

Als Dicarbonsäureanhydride eignen sich Anhydride wie Phthalsäureanhydrid, Tetrahydrophthalsäureanhydrid, Hexahydrophthalsäureanhydrid, Maleinsäureanhydrid, Bernsteinsäureanhydrid, Trimellitsäureanhydrid und Isatosäureanhydrid. Ebenso geeignet sind die Alkan- und Alkenylbernsteinsäureanhydride wie Hexyl-, Hexenyl-, Octyl-, Octenyl-, Nonyl-, Decyl-, Decenyl-, Dodecyl-, Dodecenyl-, Tetradecyl-, Tetradecenyl-, Hexadecyl-, Hexadecenyl-, Octadecyl-, Octadecenyl-, iso-Octadecyl-, iso-Octadecenyl-, Eicosyl- und Docosylbemsteinsäureanhydrid.

Als Epoxide eignen sich bevorzugt Monoepoxide wie Ethylenoxid, Propylenoxid, 1,2-Epoxybutan, 1,2-Epoxyhexan, 1,2-Epoxyoctan, 1,2-Epoxydecan, 1,2-Epoxydodecan, 1,2-Epoxyhexadecan, 1,2-Epoxyoctadecan, Stearinsäureglycidylether, Epoxybutylstearat, Laurylglycidylether, Glycidylmethylether, Glycidylethylether, Glycidylpropylether, Glycidylbutylether, Glycidyltertiärbutylether, Glycidylacrylat, Glycidylmethacrylat, Allylglycidylether, Butadienmonoxid, Glycidol, 3-Glycidoxypropyltrimethoxysilan, 3-Glycidoxypropyltriethoxysilan, Di-N-Butylamino-2,3-epoxypropan, Diethyl-β,γ-epoxypropylphosphat, 4-(2,3-Epoxypropyl)morpholin, Styroloxid und Phenoxypropylenoxid.

Die Aktivierung des Polysaccharids erfolgt mit Alkalilauge. Hierbei können verschiedene Methoden angewendet werden.

Zum einen kann die Alkalicellulose durch Behandlung der Cellulose mit wässriger Alkalilauge (Maischalkalisierung), anschließender Filtration und Trocknung hergestellt werden. Die Konzentration der Natronlaugelösung beträgt hierbei 5-50 Gew.-%, vorzugsweise 10-25 Gew.-%. Der Alkaligehalt der so hergestellten Alkalicellulose beträgt 0,1 bis 30 Gew.-%, vorzugsweise 1-15 Gew.-%.

Alternativ läßt sich die Behandlung des Polysaccharids mit wässriger Alkalilauge in einer Suspension des Polysaccharids in organischen Suspensionsmitteln wie z. B. Alkoholen, Ketonen oder Ethern vornehmen (Slurry-Verfahren).

Sowohl die in der Maischalkalisierung als auch die im Slurry-Verfahren dargestellten Alkalipolysaccharide können wie in EP 0093368 beschrieben mit Lösungsmitteln/-gemischen extrahiert werden. Hierdurch kann ungebundenes Alkali und überschüssiges Wasser aus dem Alkalipolysaccharid entfernt werden.

Alternativ kann das Polysaccharid bereits im Rührautoklaven mit wäßrigem Alkali behandelt und die Reaktion mit dem Epoxid direkt anschließend durchgeführt werden. Zur Umsetzung mit dem Dicarbonsäureanhydrid wird das im Reaktionsgemisch vorhandene Wasser vorzugsweise abdestilliert und das Alkalipolysaccharid im jeweiligen Lösemittel suspendiert.

Die Aktivierung des Polysaccharids kann alternativ zur Aktivierung mit Alkalilauge durch tertiäre organische Amine oder auch durch anorganische, basische Salze vorgenommen werden.

Als Amine eignen sich tertiäre organische Amine wie Trimethylamin, Triethylamin, Tributylamin, Tetramethylendiamin, Pyridin, N,N-Dimethylcyclohexyldiamin, N,N-Dimethylbenzylamin, 4-Pyrrilidinopyridin, Permethyldiethylentramin, 1,4-Diazabicyclo(2.2.2)octan, 1,8-Diazabicyclo(5.4.0)undec-7-en, 1,5-Diazabicyclo(4.3.0)non-5-en sowie beliebige Mischungen aus ihnen.

Hierbei ist die einzusetzende Menge an Amin abhängig vom vorhandenen Derivatisierungsgrad des Polysaccharids. Wird das Polysaccharid derivatisiert eingesetzt, z.B. als Hydroxyethyl- oder Hydroxypropyl-Derivat, reichen katalytische Mengen Amin zur Reaktion aus. Zur Umsetzung mit dem nativen Polysaccharid wird das Amin im molaren Verhältnis zum Polysaccharid von 0,1 bis 5, bevorzugt von 0,5 bis 3 eingesetzt.

Dienen basische Salze als Katalysator, eignen sich hierzu Salze wie Natriumcarbonat, Natriumacetat, Kaliumcarbonat, Kaliumacetat und Lithiumcarbonat.

Die zur Umsetzung des Polysaccharid/derivates eingesetzten Katalysatoren bzw. Aktivatoren werden auch zur Reaktion der Carbonsäure mit den Alkylenoxiden verwendet.

Zur Umsetzung des Polysaccharids mit dem Epoxid beträgt die Reaktionstemperatur 20 bis 150°C, vorzugsweise 50 bis 120°C. Die Reaktionszeiten betragen 0,5 bis 5 Stunden, vorzugsweise 0,5 bis 1 Stunden.

Die Reaktionstemperatur des alkalischen oder aminaktivierten Celluloseethers mit dem Dicarbonsäureanhydrid beträgt 30 bis 150°C, vorzugsweise 50 bis 120°C. Die Reaktionszeiten betragen 0,5 bis 4 Stunden, vorzugsweise 0,5 bis 2 Stunden.

Die Reaktionstemperatur des intermediär entstehenden Polysacchariddicarbonsäure-halbesters mit dem Alkylenoxid beträgt 20 bis 150°C, vorzugsweise 40 bis 130°C, besonders bevorzugt 50 bis 120°C. Die Reaktionszeiten betragen 0,5 bis 16 Stunden, vorzugsweise 0,5 bis 8 Stunden, besonders bevorzugt 0,5 bis 4 Stunden.

Die nach dem erfindungsgemäßen Verfahren und erfindungsgemäß beschriebenen Polysaccharidetherester sind löslich in organischen Lösemitteln wie DMSO, DMAc, DMF, Dioxan, THF oder n-Butanol.

Weiterhin sind diese Verbindungen thermoplastisch und mit den herkömmlichen Verarbeitungstechniken wie Extrusion in z. B. Spritzgußformteile oder Folien überführbar.

Die erfindungsgemäßen Polysaccharidderivate sind geeignet zur Herstellung von biologisch abbaubaren Folien, Töpfen, Flaschen und anderen Formkörpern. Sie können in ihren Eigenschaften durch die Herstellung von Blends beliebiger Zusammensetzung mit anderen biologisch abbaubaren Komponenten, wie z. B. Stärke, Cellulose, Poly-Lactid-Glykolid, Polyhydroxybuttersäure, Polyhydroxyvaleriansäure, Polyhydroxycapronsäure, Polyesteramiden oder Polyesterurethanen variiert werden. Die Kombination mit Weichmachern ist dabei ebenfalls möglich.

Diese Polysaccharidderivate sind biologisch abbaubar. Hierbei ist die biologische Abbaubarkeit unhabhängig vom Substitutionsgrad mit Dicarbonsäureester. Dies ist völlig überraschend, da bei allen bekannten Polysaccharidderivaten die biologische Abbaubarkeit mit zunehmendem Substitutionsgrad abnimmt.

Die erfindungsgemäßen Polysaccharidetherester zeichnen sich gegenüber den bekannten Polysacchariddicarbonsäurehalbestern durch eine Reihe von Vorteilen aus:
- Sie sind in einfachen Rührautoklaven des Stand der Technik zu synthetisieren.
- Der segmentierte Aufbau der neuen Polysaccharidetherester kann in einem Reaktionsgefäß durchgeführt werden.
- Die Derivatisierung kann in organischen Standard-Lösungsmitteln durchgeführt werden, wobei das entstehende Polysaccharidderivat gelöst wird.
- Die Derivate lassen sich als freifließende Pulver mit weit einstellbarem Schmelzbereich gewinnen.
- Die freifließenden Pulver sind auf herkömmlichen Extrudern thermoplastisch verarbeitbar.
- Es können in wirtschaftlicher Weise Folien und Formteile in hoher Qualität hergestellt werden.
- Die Folien sind und Formkörper sind geruchsfrei, wasserfest und erfüllen alle Anforderungen an das Leistungsprofil herkömmlicher Materialien.
- Die resultierenden Folien und Formkörper sind biologisch abbaubar.

Die Eigenschaft der biologischen Abbaubarkeit wird dabei wie folgt untersucht:

Je 100mg des Polysaccharidetheresters werden in zwei Zentrifugenröhrchen eingewogen. Anschließend werden nacheinander 2,5 ml 0,3 M Kalium-Phosphat-Puffer pH 6,0 und 2,5ml 0,3 M Natrium-Acetat-Puffer pH 6,0 zugesetzt. Käufliche Cellulasen, Esterasen, Amylasen und Lipasen aus unterschiedlichen Organismen werden gemischt und im oben genannten Puffer gelöst. Je einem der beiden Röhrchen wird das Enzymgemisch zugesetzt und dadurch die Inkubation gestartet. Die Röhrchen werden auf einem Schüttler bei 30°C für mehrere Stunden inkubiert. Anschließend wird das Polymer abzentrifugiert und aus dem Überstand eine Probe entnommen, in der die Menge an reduzierenden Zuckern bestimmt wird.

Der Nachweis reduzierender Enden erfolgt wie folgt:

Zu einem Teil 2,5g 4-Hydroxybenzoesäurehydrazid in 50ml 0,5M HCl werden 9 Teile 0,5 M NaOH gegeben. 3ml dieser Lösung werden mit 0,1ml der zu analysierenden zuckerhaltigen Lösung 5 Minuten in kochendem Wasser inkubiert. Die Extinktion der Lösung wird bei 410nm gegen Wasser ermittelt.

Über eine mit Glucose erstellte Eichkurve wird die Menge an reduzierenden Enden (als Glucose) bestimmt, die durch die Aktivität der Enzyme neu entstanden sind. Der Wert muß um den in der Kontrolle ohne Enzyme korrigiert werden. Eine Substanz wird dann als abbaubar eingestuft, wenn die gleiche Glucosefreisetzung wie bei Holzzellstoff (20µg Glucose/ ml h) gefunden wird.

Test zur Ermittlung der Kompostierbarkeit:

Die zu testenden Verbindungen werden als Folien in 6x6 Diarahmen eingespannt und bei 80°C bis zur Gewichtskonstanz getrocknet. Anschließend werden sie in einem geeignetem Kasten in eine 2 cm hohe Mischung aus geschreddertem Blumenschnitt (1 Teil, w/w) und durchgerottetem Gartenkompost (2 Teile, w/w) eingelegt.

Zur Einstellung einer hohen Luftfeuchtigkeit werden wassergefüllte Kristallisierschalen auf das Kompostgemisch gestellt. Die gefüllten Kästen werden in einem Brutschrank für jeweils 4 Wochen nacheinander bei 60, 50 und 37°C inkubiert. Wasserverluste werden über den Gewichtsverlust bestimmt und ausgeglichen. Während der Inkubation wird regelmäßig der pH-Wert des Komposts gemessen. Wenn der gemessene Wert um mehr als eine Einheit von pH 7 abweicht, wird der Wasserverlust durch 100 mM Kalium-Phosphat pH 7,0 ausgeglichen. Nach jeweils 4 Wochen wird ein Ansatz abgebrochen, die Folien entnommen, gereinigt, bei 80°C bis zur Gewichtskonstanz getrocknet und fotografiert. Unmittelbar nach dem Trocknen wird der Gewichtsverlust der Folie durch erneutes Wiegen bestimmt.

In der vergifteten Kontrolle wird der Ansatz komplett bei 105°C getrocknet und das dabei verdampfte Wasser dann durch eine 0,1 %ige HgCl₂-Lösung ersetzt. Die Proben für die vergiftete Kontrolle werden vor dem Einbringen in das Kompostgemisch in die HgCl₂-Lösung eingelegt und dann getrocknet. Der Kontrollansatz wird genauso inkubiert wie die zu testenden Ansätze. Eine Substanz wird dann als abbaubar eingestuft, wenn nach 12 Wochen im unvergifteten Ansatz keine Probensubstanz mehr nachzuweisen, die Probe im vergifteten Ansatz jedoch unverändert ist.

Die neuen erfindungsgemäßen Polysaccharidpolyetherester eignen sich zur Herstellung von Formteilen wie z. B. Flaschen, Blumentöpfen, Einmalbesteck und -geschirr, Golf-Tees, Folien zur Verpackung von Lebensmitteln und Bioabfällen, Mulchfolien, Babywindeln usw.. Weiterhin sind sie geeignet zur Beschichtung von Flächengebilden wie z.B. Papier, Fließen, Geweben, Gewirken oder anderen Substraten oder auch zur Herstellung von Fasern, Blends und Laminaten. Entsprechende Materialien sind auch z.B. dem Papier-Recycling zugänglich.

Der Gegenstand der vorliegenden Erfindung soll anhand der vorliegenden Beispiele noch näher erläutert werden.

### Beispiele

### Beispiel 1

10,77g Hydroxypropylcellulose (MS = 0,92) werden in 300g Dioxan mit 0,2ml 1,8-Diazabicyclo(5.4.0)undec-7-en bei 60°C 0,5 Stunden gerührt. Zu dieser Suspension werden 37g Phthalsäureanhydrid gelöst in 50g Dioxan hinzugetropft und bei 60°C eine Stunde gerührt. Der Reaktionsansatz wird auf 80°C geheizt. Es werden 43,5g Propylenoxid zugetropft und 4 Stunden bei 80°C gerührt. Hierbei entsteht eine Lösung des Celluloseetheresters in Dioxan. Anschließend wird die Lösung in 1,51 Isopropanol eingerührt und das ausgefallene Produkt filtriert und mit Isopropanol gewaschen. Der Erweichungspunkt liegt bei 130°C. Der über Festkörper-NMR bestimmte Substitutionsgrad beträgt 1,7 Mol Phthalsäure und 2,75 Mol Propylgruppen pro Glucoseeinheit. Im Enzymtest wird eine Glucosefreisetzung der bei 60°C vorinkubierten Probe von 85,19 µg Glucose/ ml h gefunden. Im Kompostiertest ist die Probe nach vier Wochen vollständig abgebaut.

### Beispiel 2

9,68g Hydroxyethylcellulose (MS = 0,72) werden in 300g Dimethylsulfoxid mit 0,2ml 1,8-Diazabicyclo(5.4.0)undec-7-en bei 60°C 0,5 Stunden gerührt. Zu dieser Suspension werden 37g Phthalsäureanhydrid gelöst in 50g Dimethylsulfoxid hinzugetropft und bei 60°C eine Stunde gerührt. Der Reaktionsansatz wird auf 80°C geheizt. Es werden 43,5g Propylenoxid zugetropft und 4 Stunden bei 80°C gerührt. Hierbei entsteht eine Lösung des Celluloseetheresters in Dimethylsulfoxid. Anschließend wird die Lösung in 1,51 Isopropanol eingerührt und das ausgefallene Produkt filtriert und mit Isopropanol gewaschen. Der Schmelzpunkt liegt bei 110°C. Der über Festkörper-NMR bestimmte Substitutionsgrad beträgt 2,0 Mol Phthalsäure und 2,3 Mol Propylgruppen pro Glucoseeinheit. Im Enzymtest wird eine Glucosefreisetzung der bei 60°C vorinkubierten Probe von 80,1 µg Glucose/ml h gefunden. Im Kompostiertest ist die Probe nach vier Wochen vollständig abgebaut.

### Beispiel 3

8,1g Weizenstärke und 15,15g Triethylamin werden in 300g Dimethylsulfoxid bei 60°C 0,5 Stunden gerührt. Anschließend werden 37g Phthalsäureanhydrid in 50g Dimethylsulfoxid zugetropft und eine Stunde bei 60°C gerührt. Der Reaktionsansatz wird auf 80°C geheizt und 43,5g Propylenoxid zugetropft und 1 Stunde bei 80°C gerührt. Anschließend wird die Lösung in 1,51 Aceton eingerührt und das ausgefallene Produkt filtriert und mit Aceton gewaschen. Der Erweichungspunkt liegt bei 155°C. Der über Festkörper-NMR bestimmte Substitutionsgrad beträgt 2,3 Mol Phthalsäure und 1,01 Mol Propylgruppen pro Glucoseeinheit. Im Enzymtest wird eine Glucosefreisetzung der bei 60°C vorinkubierten Probe von 91,25 µg Glucose/ ml h gefunden. Im Kompostiertest ist die Probe nach vier Wochen vollständig abgebaut.

### Beispiel 4

8,1g Baumwollinters und 15,15g Triethylamin werden in 300g Dimethylsulfoxid bei 60°C 0,5 Stunden gerührt. Anschließend werden 38,5g Hexahydrophthalsäureanhydrid in 50g Dimethylsulfoxid zugetropft und 2 Stunden bei 60°C gerührt. Der Reaktionsansatz wird auf 80°C geheist und 43,5g Propylenoxid zugetropft und 1 Stunde bei 80°C gerührt. Anschließend wird die Lösung in 1,51 Isopropanol eingerührt und das ausgefallene Produkt filtriert und mit Isopropanol gewaschen. Der Schmelzpunkt liegt bei 120°C. Der über Festkörper-NMR bestimmte Substitutionsgrad beträgt 3,0 Mol Hexahydrophthalsäure und 3,0 Mol Propylgruppen pro Glucoseeinheit. Im Enzymtest wird eine Glucosefreisetzung der bei 60°C vorinkubierten Probe von 70,6 µg Glucose/ ml h gefunden. Im Kompostiertest ist die Probe nach vier Wochen vollständig abgebaut.

### Beispiel 5

1084g Baumwollinters werden in 22,51 Isopropanol und 2,51 Wasser und 0,63kg NaOH-Plätzchen 90 Minuten bei 25°C alkalisiert. Anschließend wird mit 101 Isopropanol/Wasser (80/20) gewaschen und zentrifugiert und nochmals mit 101 Isopropanol aufgerührt und zentrifugiert. Die so hergestellte Alkalicellulose besitzt einen Alkaligehalt von 6,8%.

Zu 130,1g der so gewonnenen Alkalicellulose werden im Rührautoklaven 49g Ethylenoxid unter Stickstoffatmosphäre zudosiert und 1,5 Stunden bei 50°C gerührt. Dem Reaktionsansatz werden anschließend 1000ml Dimethylacetamid und 205g Tetrahydrophthalsäure zugesetzt und der Ansatz 1,5 Stunden bei 60°C gerührt. Der Reaktionsansatz wird auf 80°C geheizt und 215g Propylenoxid zugetropft und 1 Stunde bei 80°C gerührt. Anschließend wird die Lösung in 101 Isopropanol eingerührt und das ausgefallene Produkt filtriert und mit Isopropanol gewaschen. Der Erweichungspunkt liegt bei 160°C. Der über Festkörper-NMR bestimmte Substitutionsgrad beträgt 2,2 Mol Tetrahydrophthalsäure und 1,8 Mol Propylgruppen pro Glucoseeinheit. Im Enzymtest wird eine Glucosefreisetzung der bei 60°C vorinkubierten Probe von 68,83 µg Glucose/ ml h gefunden. Im Kompostiertest ist die Probe nach vier Wochen vollständig abgebaut.

## Patentansprüche

1. Thermoplastische und biologisch abbaubare Polysaccharidetherester, die dadurch gekennzeichnet sind, daß sie sich durch die allgemeine Struktur
Polysaccharid-O-R
beschreiben lassen, wobei Polysaccharid-O die substituierten OH-Gruppen einer polymeren Saccharideinheit präsentieren und R entweder ein mono-und/oder polymerer Substituent der Struktur X ist:
X = -A-B-A'-
in der A und A' eine lineare Polyetherkette folgender Struktur sind:
A = (-D-O)ₙ und A' = (-D-O)ₘH
in der D eine lineare aliphatische verzweigte oder unverzweigte Kette mit 2 bis 11 C-Atomen bedeutet und n eine ganze Zahl gleich oder größer als 0 ist, und m eine ganze Zahl gleich oder größer als 1 ist, und B eine Dicarbonsäure folgender Struktur ist: 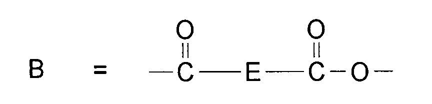 in der E ein aromatisches oder aliphatisches Kohlenstoffgerüst das gegebenenfalls mit weiteren Substituenten versehen sein kann ist, wobei das Verhältnis von A' zu B gleich oder größer 0,1 ist, oder R ist entsprechend dem Substitutionsgrad pro Saccharideinheit mit X gleich H (Wasserstoff) und/oder Alkyl mit 1 bis 4, vorzugsweise 1 bis 2 C-Atomen.

2. Thermoplastische und biologisch abbaubare Polysaccharidetherester gemäß Anspruch 1, dadurch gekennzeichnet, daß sie pro Mol Polysaccharideinheit 0,1 bis 6,5 Mol Alkylether und 0,1 bis 3,0 Mol Dicarbonsäureester enthalten.

3. Verfahren zur Herstellung thermoplastischer und biologisch abbaubarer Polysaccharidester gemaß Anspruch 1 oder 2, dadurch gekennzeichnet, daß das Polysaccharid oder das Polysaccharidderivat mit Alkalilauge, oder tertiären organischen Aminen oder basischen anorganischen Salzen aktiviert wird und in Suspensions- bzw. Lösungsmitteln zuerst mit Dicarbonsäureanhydriden und anschließend mit Epoxiden zur Reaktion gebracht wird.

4. Verfahren nach Anspruch 3, dadurch gekennzeichnet, daß das Polysaccharid durch Behandlung mit wässriger NaOH oder Mischungen aus wässriger NaOH mit wasserlöslichen organischen Lösungsmitteln oder durch tertiäre organische Amine in organischen Lösungsmittel oder durch anorganische, basische Salze in organischen Lösungsmitteln voraktiviert wird.

5. Verfahren nach den Ansprüchen 3 oder 4, dadurch gekennzeichnet, daß die gewonnenen Polysaccharidetherester durch Fällung in Wasser oder einem organischen Lösemittel oder durch Entfernen der Reaktionslösung isoliert werden.

6. Formteile, Folien, Fasern, Beschichtungen, Blends und Laminate, dadurch gekennzeichnet, daß sie mindesten zu 10% aus den Polysaccharidetherestern gemäß Anspruch 1 oder 2 bestehen.

## Claims

1. Thermoplastic and biodegradable polysaccharide ether esters, which are characterised in that they may be described by the general structure
Polysaccharide-O-R,
wherein polysaccharide-O represents the substituted OH groups of a polymeric saccharide unit and R is either a monomeric and/or polymeric substituent of the structure X:
X = -A-B-A'-
in which A and A' are a linear polyether chain of the following structure:
A = (-D-O)ₙ and A' = (-D-O)ₘH
in which D means a linear aliphatic or aromatic branched or unbranched chain with 2 to 11 C atoms and n is an integer greater than or equal to 0, and m is an integer greater than or equal to 1, and B is a dicarboxylic acid of the following structure: 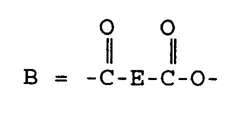 in which E is an aromatic or aliphatic carbon skeleton which may optionally be provided with further substituents, wherein the ratio of A' to B is greater than or equal to 0.1, or R, in accordance with the degree of substitution per saccharide unit with X, is H (hydrogen) and/or alkyl having 1 to 4, preferably 1 to 2 C atoms.

2. Thermoplastic and biodegradable polysaccharide ether esters according to claim 1, characterised in that they contain 0.1 to 6.5 mol of alkyl ether and 0.1 to 3.0 mol of dicarboxylic acid ester per mol of polysaccharide units.

3. Process for the production of thermoplastic and biodegradable polysaccharide esters according to claim 1 or 2, characterised in that the polysaccharide or polysaccharide derivative is activated with alkali metal hydroxide solution or organic tertiary amines or basic inorganic salts and reacted in suspending agents or solvents first with dicarboxylic acid anhydrides and then with epoxides.

4. Process according to claim 3, characterised in that the polysaccharide is preactivated by treatment with aqueous NaOH or mixtures of aqueous NaOH with water-soluble organic solvents, or by tertiary organic amines in organic solvents or by inorganic, basic salts in organic solvents.

5. Process according to claim 3 or 4, characterised in that the polysaccharide ether esters obtained are isolated by precipitation in water or an organic solvent or by removal of the reaction solution.

6. Mouldings, films, fibres, coatings, blends and laminates, characterised in that they consist to an amount of at least 10% of the polysaccharide ether esters according to claim 1 or 2.

## Revendications

1. Ether-esters de polysaccharides thermoplastiques et biodégradables qui se caractérisent par le tait qu'on peut les décrire par la structure générale
polysaccharide-O-R
dans laquelle "polysaccharide-O" représente les groupes OH substitués d'une unité de saccharide polymère et R représente un substituant monomère et/ou polymère de structure X :
X = -A-B-A'-
dans laquelle A et A' représentent une chaîne de polyéther linéaire possédant la structure indiquée ci-après :
A = (-D-O)ₙ et A' = (-D-O)ₘH
dans laquelle D représente une chaîne aliphatique linéaire ramifiée ou non ramifiée contenant de 2 à 11 atomes de carbone et n représente un nombre entier égal ou supérieur à 0, m représente un nombre entier égal ou supérieur à 1, et B représente un acide dicarboxylique possédant la structure indiquée ci-après : 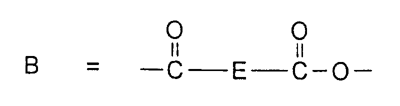 dans laquelle E représente un squelette carboné aromatique ou aliphatique qui, le cas échéant, peut porter d'autres substituants, le rapport de A' à B étant supérieur ou égal à 0,1, ou bien R représente, en fonction du degré de substitution par unité de saccharide avec X, un atome d'hydrogène et/ou un groupe alkyle contenant de 1 à 4, de préférence de 1 à 2 atomes de carbone.

2. Ether-esters de polysaccharides thermoplastiques et biodégradables selon la revendication 1, caractérisés en ce qu'ils contiennent par mole d'unité de polysaccharide de 0,1 à 6,5 moles d'éther alkylique et de 0,1 à 3,0 moles d'ester dicarboxylique.

3. Procédé pour la préparation d'esters de polysaccharides thermoplastiques et biodégradables selon la revendication 1 ou 2, caractérisé en ce qu'on active le polysaccharide ou le dérivé de polysaccharide avec un alcali ou avec des amines organiques tertiaires ou encore avec des sels inorganiques basiques et on l'amène à réagir dans des agents de mise en suspension, respectivement dans des solvants d'abord avec des anhydrides dicarboxyliques, puis avec des époxydes.

4. Procédé selon la revendication 3, caractérisé en ce qu'on soumet le polysaccharide à une activation préalable par traitement avec du NaOH aqueux ou avec des mélanges de NaOH aqueux avec des solvants organiques solubles dans l'eau ou avec des amines tertiaires dans des solvants organiques ou encore avec des sels basiques inorganiques dans des solvants organiques.

5. Procédé selon la revendication 3 ou 4, caractérisé en ce qu'on isole les éther-esters de polysaccharides obtenus par précipitation dans de l'eau ou dans un solvant organique ou par élimination de la solution réactionnelle.

6. Eléments moulés, feuilles, fibres, enductions, mélanges homogènes et stratifiés caractérisés en ce qu'ils sont constitués jusqu'à concurrence d'au moins 10% par les éther-esters de polysaccharides selon la revendication 1 ou 2.
